# EUROPEAN PATENT SPECIFICATION

(11) **EP 3 450 952 B1**
(45) Date of publication and mention of the grant of the patent: **30.03.2022**
(21) Application number: 18192546.2
(22) Date of filing: 04.09.2018
(51) Int. Cl.: G01M 13/00, F16L 1/00, G01M 11/08

(54) **SYSTEM FOR SETTING LAYOUT OF BRAKE HOSE**
SYSTEM ZUM EINSTELLEN DES LAYOUTS EINES BREMSSCHLAUCHS
SYSTÈME POUR CONFIGURER UN AGENCEMENT DE FLEXIBLE DE FREIN

(30) Priority: 05.09.2017 KR 20170113248
(43) Date of publication of application: 06.03.2019
(73) Proprietor: HS R & A Co., Ltd., Yangsan-si, Gyeongsangnam-do 50592 (KR)
(72) Inventor: Choi, Jae Hyeok, 50634 Yangsan-si (KR); Kim, Guk Hyun, 50634 Yangsan-si (KR); Kim, Youn Kyou, 50619 Yangsan-si (KR); Heo, Jong In, Geumjeong-gu, Busan (KR)
(74) Representative: Stellbrink & Partner Patentanwälte mbB

(56) References cited:
- DE-U1- 20 208 483
- JP-A- 2005 088 692
- KR-B1- 101 574 287
- US-A- 5 339 677

## Description

### BACKGROUND

### 1) FIELD

The disclosure relates to a layout setting system for a brake hose, and more particularly, to a layout setting system for a brake hose, which is improved to prevent the occurrence of an initial twist of a brake hose when implementing the layout and to further facilitate test fastening.

### 2) DESCRIPTION OF RELATED ART

The above information is presented as background information only to assist with an understanding of the present disclosure. No determination has been made, and no assertion is made, as to whether any of the above might be applicable as prior art with regard to the present disclosure.

In general, a brake actuator is provided at the center of the front axle of a vehicle, and a brake hose is connected to the actuator in order to supply a working fluid thereto. In the case of the front axle, the wheels move up and down depending on the condition of the road surface, and the wheels move left and right when steering. A tube for supplying the working fluid must be flexible so as to be deformed according to the movement of the wheels, and the brake hose is a rubber hose.

The brake hose is required to be stably installed without causing interference with surrounding parts and without shaking. Respective parts of a vehicle must be strictly controlled because the vehicle is directly related to the life of a driver, and especially, the brake system is more important than any other part.

The brake hose is tested for interference with surrounding parts. A conventional interference test process for the brake hose includes installing the brake hose in the actual vehicle when the design of the brake hose is completed and checking whether or not the brake hose interferes with surrounding parts while the vehicle is running.

If the brake hose interferes with surrounding parts during the layout test, the brake hose must be removed, redesigned, reinstalled, and then processed for the test, which brings about problems in that it takes a long time to manufacture the brake hose and the manufacturing cost is increased.

In order to solve the above problems, the applicant has proposed a system and a method for accurately setting the layout of a brake hose by predicting the interference characteristics between the brake hose and surrounding parts in Korean Patent No. 10-1574287 (registered on 27 Nov 2015).

However, even with the system and method according to the disclosed patent, it is difficult to precisely set the interference characteristics between the brake hose and the surrounding parts in the initial stage of the layout test, so that there is a problem in that the brake hose is twisted. Furthermore, since the parts for fastening and fixing the brake hose are different from each other depending on a fixed bracket and a moving bracket, it takes time to fasten the brake hose and inconvenience is caused.

### SUMMARY

The disclosure has been made in order to solve the conventional problems described above, and an aspect of the disclosure is to provide a layout setting system for a brake hose, which is improved to prevent the occurrence of an initial twist of the brake hose when implementing the layout by accurately predicting and setting the interference characteristics between the brake hose and surrounding parts, and which is improved to further facilitate test fastening by fastening and fixing the brake hose in common regardless of a fixed bracket and a moving bracket.

In accordance with an aspect of the present disclosure, a layout setting system for a brake hose, comprising: a testing part provided to test the layout of the brake hose while brake hose fixing parts, which are manufactured using a 3D printer, are mounted; a scanning part provided to scan the layout of the brake hose and to obtain layout data during the layout test of the brake hose; and a controller for comparing the layout data of the brake hose obtained from the scanning part with surrounding part data to determine whether or not interference occurs between the brake hose and surrounding parts and for correcting data on interfering parts to then provide the same to the 3D printer, wherein the testing part comprises the brake hose fixing parts and first and second fitting members coupled to both ends of the brake hose, respectively, and wherein the first and second fitting members have the same structure.

The testing part further includes: a fixed bracket for fixing the first fitting member; a moving bracket for fixing the second fitting member; a jig provided to support one end of the brake hose; and a robot unit for moving the brake hose up, down, left, and right while supporting the opposite end of the brake hose.

The first and second fitting members include: a fitting portion coupled to the brake hose; a locking piece formed to protrude from the top of the fitting portion and to be engaged with the upper surfaces of the fixed bracket and the moving bracket, respectively; and a connecting portion for connecting the fitting portion with the locking piece, and wherein the connecting portion includes fastening surfaces formed in parallel with each other by cutting both sides thereof and has a diameter greater than those of the fitting portion and the locking piece.

The respective fastening surfaces of the first and second fitting members are formed at an angle based on angle data capable of preventing the occurrence of an initial twist of the brake hose when the layout is implemented.

The fixed bracket may include: a fixing portion for fixing the first fitting member to the jig; a bent portion formed to be bent from the lower end of the fixing portion; and a protruding portion protruding from the bent portion and having an insertion hole for receiving a locking piece of the first fitting member to be fixed thereto.

The moving bracket may include an insertion hole formed on the front surface thereof so as to receive the second fitting member therein and a screw fastening hole formed on the side surface so as to screw a gripping part of the robot unit inserted through the rear surface thereof, and wherein the second fitting member is inserted horizontally into the insertion hole of the moving bracket and is then coupled thereto.

The moving bracket may include an insertion hole formed on the lower surface thereof so as to receive the second fitting member therein and a screw fastening hole formed on the side surface so as to screw a gripping part of the robot unit inserted through the rear surface thereof, and wherein the second fitting member is inserted vertically into the insertion hole of the moving bracket and is then coupled thereto.

The fastening surface of the fitting member inserted into the insertion hole may be screwed by a screw, and wherein the moving bracket is selected in consideration of an operating range of the robot unit and easiness for photographing of the scanning part.

In accordance with an another aspect of the present disclosure, a layout setting method for a brake hose, wherein the method uses the layout setting system described above, the method comprising: manufacturing fixing parts of the brake hose using a 3D printer; mounting the fixing parts of the brake hose manufactured using the 3D printer and testing the layout of the brake hose; scanning the layout of the brake hose to obtain layout data; comparing the layout data of the brake hose with surrounding part data to determine whether or not interference occurs and obtaining correction data on interfering parts; and if there is an interfering part, providing the correction data to the 3D printer, thereby remanufacturing the fixing parts of the brake hose, wherein the fixing parts comprises first and second fitting members, a fixed bracket, and a moving bracket, and wherein respective fastening surfaces of the first and second fitting members are formed at an angle based on angle data capable of preventing the occurrence of an initial twist of the brake hose when the layout is implemented.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 is a schematic view showing a layout setting system for a brake hose according to an embodiment;
FIG. 2 is a perspective view showing a testing part according to an embodiment;
FIG. 3 is a plan view showing a brake hose having fitting members inserted into both ends thereof according to an embodiment;
FIG. 4 is a perspective view showing the fitting member in FIG. 3;
FIG. 5 is a perspective view showing a structure of a fixed bracket according to an embodiment;
FIG. 6 is a perspective view showing a structure of a moving bracket according to an embodiment;
FIG. 7 is a perspective view showing another structure of a moving bracket according to an embodiment;
FIG. 8 is an exemplary view of a predetermined design angle implemented by the respective fitting members in FIGs. 6 and 7;
FIG. 9 is a schematic view showing a controller according to an embodiment; and
FIG. 10 is a flowchart schematically showing a layout setting method for a brake hose according to an embodiment.

### DETAILED DESCRIPTION

Hereinafter, exemplary embodiments according to the present disclosure will be described in detail with reference to the accompanying drawings. Here, it is noted that identical reference numerals denote the same structural elements in the accompanying drawings. The detailed description of known functions and structures will be omitted to avoid an unclearness of the subject matter of the present disclosure.

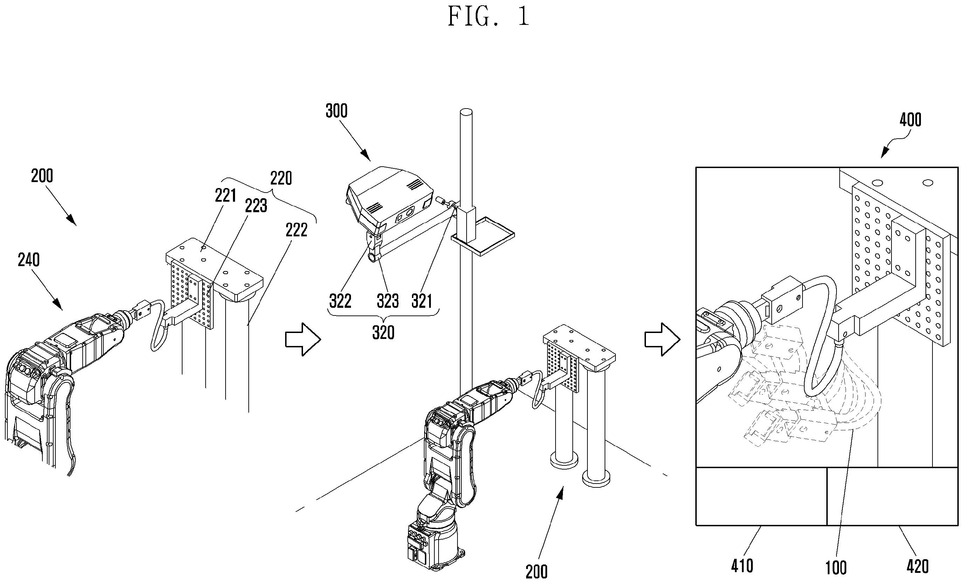

Hereinafter, embodiments will be described with reference to FIGs. 1 to 7 attached hereto.

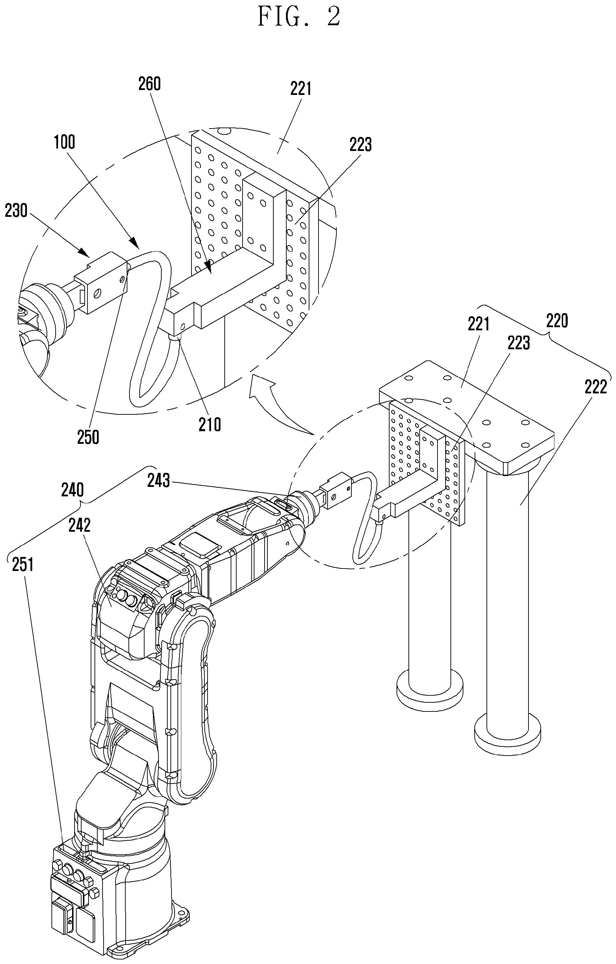

FIG. 1 is a schematic view showing a layout setting system for a brake hose according to an embodiment, and FIG. 2 is a perspective view showing a testing part according to an embodiment. Dotted lines illustrating the brake hose in FIG. 1 indicate the phases of the brake hose depending on the layout test.

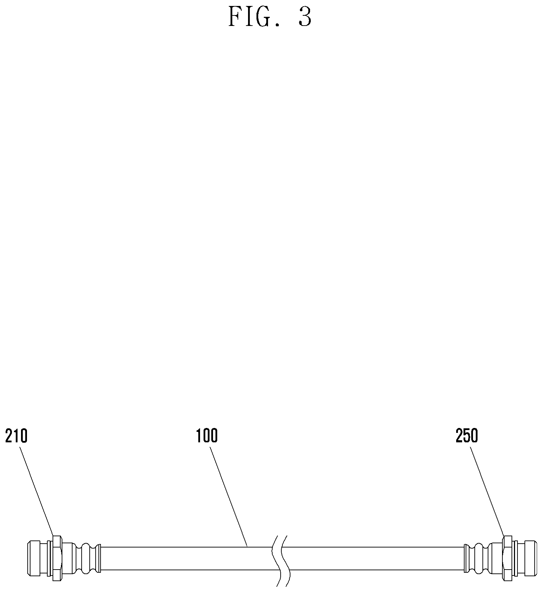

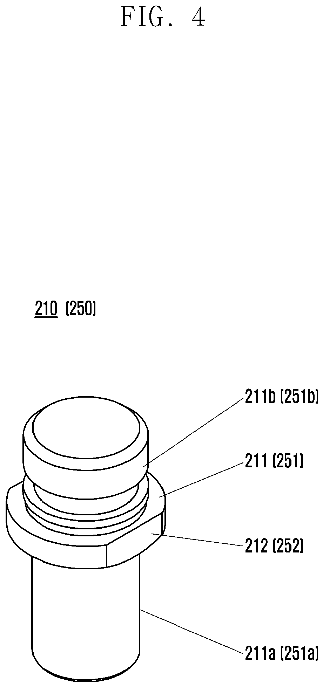

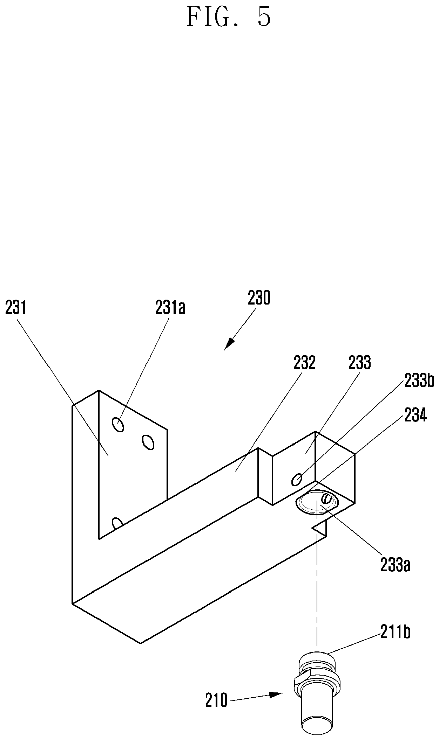

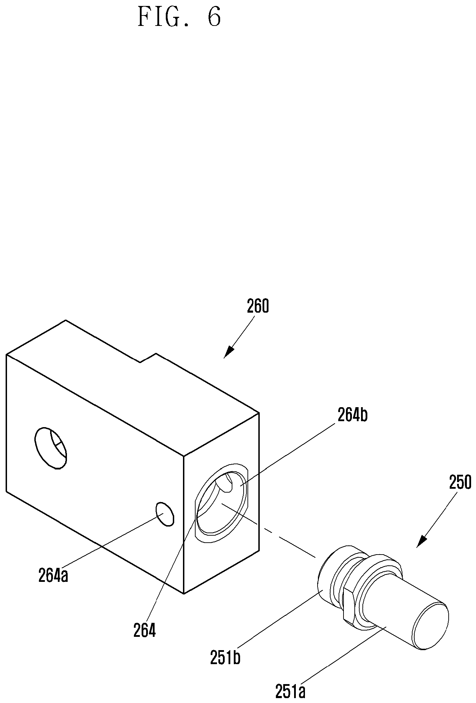

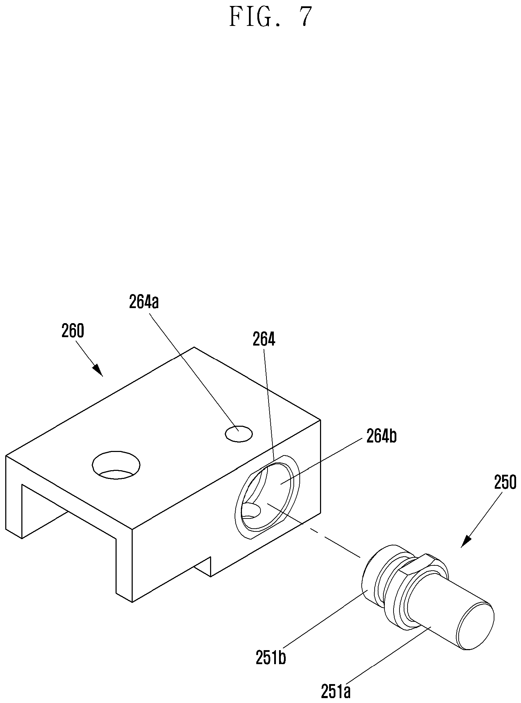

In addition, FIG. 3 shows a brake hose having fitting members inserted into both ends thereof according to an embodiment, and FIG. 4 shows the fitting member in FIG. 3. FIG. 5 shows a structure of a fixed bracket according to an embodiment, and FIGs. 6 and 7 are perspective views showing a structure of a moving bracket according to an embodiment.

Referring to FIG. 1, a layout setting system for a brake hose according to an embodiment may include a testing part 200, a scanning part 300, and a controller 400.

As shown in FIG. 2, the testing part 200 is provided to test the layout of a brake hose while having the brake hose fixing parts mounted therein, which are manufactured using a 3D printer. The testing part 200 may include a pair of first and second fitting members 210 and 250 that are fixed to the brake hose, a fixed bracket 230, a moving bracket 260, a jig 220, and a robot unit 240.

As shown in FIG. 3, the first and second fitting members 210 and 250 may be coupled to both ends of a brake hose 100, respectively, by, for example, swaging.

Although only the first fitting member 210 is illustrated in FIG. 4, the first and second fitting members 210 and 250 have the same structure and shape, and each fitting member may include a fitting portion 211a coupled to one end of the brake hose 100, a locking piece 211b formed above the fitting portion 211a so as to be engaged with an insertion hole 233a of the fixed bracket 230, which will be described later, and a connecting portion 211 connecting the fitting portion 211a with the locking piece 211b and having a diameter greater than those of the fitting portion 211a and the locking piece 211b. Similarly, referring to FIGs. 6 and 7, the second fitting member 250 may include a fitting portion 251a, and a locking piece 251b engaged with an insertion hole 264b of the moving bracket 260, and a connecting portion 251. The connecting portions 211 and 251 of the first and second fitting members 210 and 250 may have fastening surfaces 212 and 252 formed by cutting both sides thereof such that the locking pieces 211b and 251b of the first and second fitting members 210 and 250 are inserted into the insertion hole 233a of the fixed bracket 230 and the insertion holes 264b of the moving bracket 260 and are engaged with the same.

One end of the brake hose 100 may be inserted into the fitting portion 211a or 251a, and may be fixed thereto by screw-fastening. In addition to screw-fastening, any structure can be used as long as it can fix one end of the brake hose 100 to the fitting portion 211a or 251a.

The jig 220 is provided in order to fix one end of the brake hose 100 and includes a jig body 221 constituting the body of the jig 220, column members 222 provided at the lower end of the jig body 221 in order to support the jig body 221, and a coupling member 223 vertically attached to the front surface of the jig body 221 so as to allow the fixed bracket 230 to be coupled thereto.

The robot unit 240 is provided to move the brake hose 100 within a predetermined layout range while gripping a portion of the brake hose 100. The robot unit 240 may include a first driving part 241, a second driving part 242, and a gripping part 243. The first driving part 241 serves to move the brake hose 100 left and right, the second driving part 242 serves to move the brake hose 100 up and down, and the gripping part 243 serves to grip a portion of the brake hose 100.

More specifically, when the driver rotates a steering wheel (not shown) in one direction during driving, the first driving part 241 allows the wheels of the vehicle to be operated in the left or right direction by a steering device (not shown) that is operated in conjunction with the operation of the steering wheel. The first driving part 241 is provided to simulate the condition in which the brake hose 100 is operated in conjunction with the movement of the wheels while the wheels are operated in the left or right direction.

The second driving part 242 is provided to simulate the condition in which the brake hose 100 moves up and down while the wheels are bumping and rebounding when the vehicle passes over protruding terrains, such as humps, during driving.

Meanwhile, FIG. 5 shows a structure of a fixed bracket according to an embodiment, and FIGs. 6 and 7 show a structure of a moving bracket, respectively, according to an embodiment;

As shown in FIGs. 2 and 5, the fixed bracket 230 is provided to fix the first fitting member 210 provided to one end of the brake hose 100 to the jig 220, and may include a fixing portion 231 coupled to the coupling member 223 of the jig 220 so as to fix the fixed bracket 230, a bent portion 232 formed to be bent from the lower end of the fixing portion 231, and a protruding portion 233 protruding from the bent portion 232.

The fixing portion 231 may have screw fastening holes 231a formed to couple the fixing portion 231 to the coupling member 223 of the jig 220 by screws. In addition, the protruding portion 233 may have an insertion hole 233a formed on the lower surface thereof so as to receive the locking piece 211b of the first fitting member 210 to be installed and a screw fastening holes 233b formed on the side surface thereof. The fastening surfaces 212 of the first fitting member 210 inserted into the insertion hole 233a are screwed by screws engaged with a locking surface 234, thereby coupling the first fitting member 210 to the fixed bracket 230.

Meanwhile, although it is not shown in detail, a reinforcing portion may be further provided at a portion where the fixing portion 231 and the bent portion 232 are connected in order to reinforce the rigidity of the connection portion. This is intended to prevent breakage of the connection portion between the fixing portion 231 and the bent portion 232 by increasing the rigidity thereof when the fixed bracket 230 shakes due to vibration occurring during the test or driving while the fixed bracket 230 is fixed to the jig 220 for testing or to the actual vehicle.

As shown in FIGs. 2 and 6, the moving bracket 260 is provided to fix the second fitting member 250 to the gripping part 243 of the robot unit 240. The moving bracket 260 may have a rectangular parallelepiped shape, and may include an insertion hole 264b formed on the front surface so as to receive the second fitting member 250 therein and a screw fastening hole 264a formed on the side surface so as to screw the gripping part 243 of the robot unit 240 inserted through the rear surface thereof. In addition, the fastening surfaces 252 of the second fitting member 250 inserted into the insertion hole 264b are screwed by screws engaged with a locking surface 264 formed on the side surfaces of the moving bracket 260, thereby coupling the second fitting member 250 to the moving bracket 260.

The second fitting member 250 includes a fitting portion 251a coupled to the opposite end of the brake hose 100 and a locking piece 251b formed above the fitting portion 251a, which has a structure the same as that of the first fitting member 210. The opposite end of the brake hose 100 may be inserted into the fitting portion 251a to then be fixed by screw-fastening, and the locking piece 251b of the second fitting member 250 may be inserted into and fixed to the insertion hole 264b of the moving bracket 150.

According to the embodiment in FIG. 6, since the insertion hole 264b for receiving the locking piece 251b of the second fitting member 250 is formed on the front surface of the moving bracket 260, the second fitting member 250 can be horizontally inserted into and coupled to the moving bracket 260.

FIG. 7 shows a moving bracket of another structure.

As shown in FIGs. 2 and 7, the moving bracket 260 is provided to fix the second fitting member 250 to the gripping part 243 of the robot unit 240. The moving bracket 260 may have a rectangular parallelepiped shape, and may include an insertion hole 264b formed on the lower surface so as to receive the second fitting member 250 therein and a screw fastening hole 264a formed on the side surface so as to screw the gripping part 243 of the robot unit 240 inserted through the rear surface thereof.

According to the embodiment in FIG. 7, since the insertion hole 264b for receiving the locking piece 251b of the second fitting member 250 is formed on the lower surface of the moving bracket 260, the second fitting member 250 can be vertically inserted into and coupled to the moving bracket 260.

Selection for the moving bracket 260 shown in FIG. 6 or the moving bracket 260 shown in FIG. 7 may be made in consideration of an operating range of the robot unit 240 and the easiness for photographing of the scanning part 300.

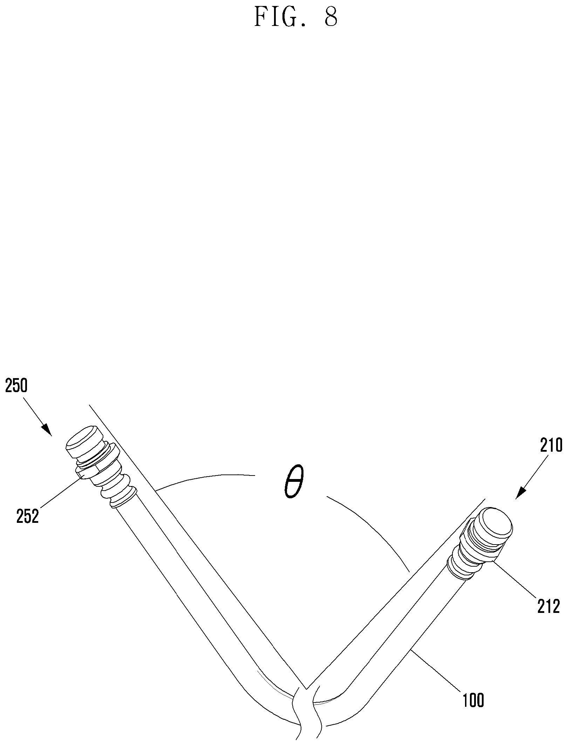

FIG. 8 is an exemplary view of a predetermined design angle implemented by the respective fitting members in FIGs. 6 and 7.

Referring to FIG. 8, the first fitting member 210 and the second fitting member 250 may be coupled to both ends of the brake hose 100, respectively, such that the first fitting member 210 is fixed to the fixed bracket 230 and the second fitting member 250 is fixed to the moving bracket 260, respectively. In this case, the first and second fitting members 210 and 250 may be inserted into the insertion hole 233a of the fixed bracket 230 and the insertion hole 264b of the moving bracket 260, respectively, and the respective fastening surfaces 212 and 252 may be fastened by screws through the screw fastening holes 234 and 264 such that the fastening surface 212 of the connecting portion 211 of the first fitting member 210 has a predetermined angle (θ) with the fastening surface 252 of the connecting portion 251 of the second fitting member 250 without being parallel with each other. In this case, the predetermined angle formed by the respective fastening surfaces 212 and 252 may be angle data capable of preventing the occurrence of an initial twist of the brake hose when implementing the layout.

Therefore, locking surfaces 234 and 264 formed in the insertion holes 233a and 264b of the respective brackets 230 and 260 correspond to the fastening surfaces 212 and 252 of the first and second fitting members 210 and 250, which have the same structure, in the layout setting system of the brake hose according to the embodiment of the disclosure, so that the first and second fitting members 210 and 250 are coupled to the fixed bracket 230 and the moving bracket 260 at an angle to prevent the initial twist of the brake hose. Thus, it is possible to use the fitting members in common for the fixed bracket 230 and the moving bracket 260 without distinguishing the same.

A pair of first and second fitting members 210 and 250, the fixed bracket 230, and the moving bracket 260, according to the embodiment of the disclosure, may be manufactured using a 3D printer, and the 3D printer (not shown) may be connected to a PC (not shown) for providing 3D data information on respective configurations, thereby creating three-dimensional products.

That is, models of the first and second fitting members 210 and 250, the fixed bracket 230, and the moving bracket 260 to be manufactured are designed by a PC using a 3D design program, and are then stored in a data format. Thereafter, the 3D drawing designed using the 3D printer is differentially divided into thin layers, and finally, the thin layers are integrally stacked one by one from the bottom, thereby obtaining a three dimensional structure. In this case, since the thickness of the layer is thinner than one piece of paper, a precise three dimensional model can be made.

Accordingly, it is possible to precisely manufacture each configuration of a desired shape by simplifying the shapes of the first and second fitting members 210 and 250, the fixed bracket 230, and the moving bracket 260, thereby reducing manufacturing time and cost. Furthermore, since the fitting members 210 and 250 have the same structure, they can be used in common for both ends of the brake hose 100.

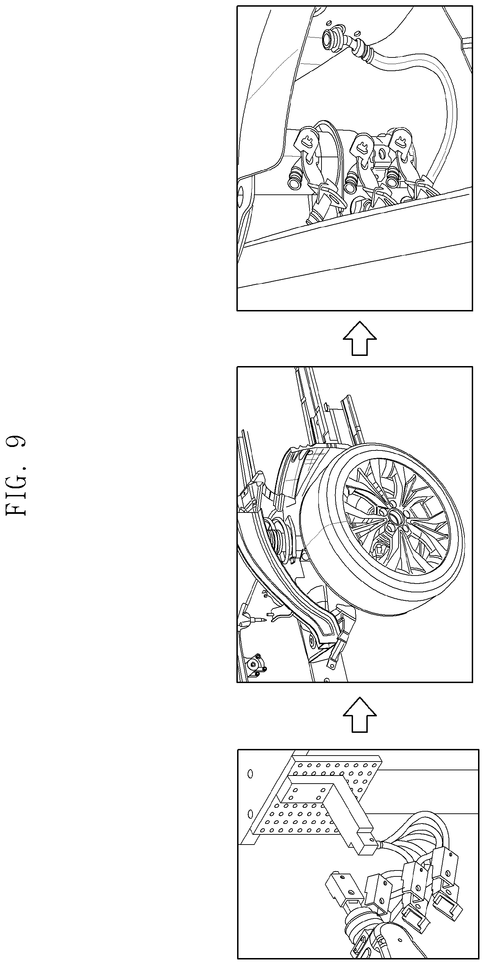

Now, installation and operation of the testing part 200 according to the embodiment of the disclosure, which has been described above, will be described with reference to FIG. 9 schematically showing a controller according to an embodiment of the disclosure.

First, the fixing portion 231 of the fixed bracket 230 is fixed to the coupling member 223 of the jig 220 by screws, and then the locking piece 211b of the first fitting member 210 is inserted into the insertion hole 233a formed in the protruding portion 233 of the fixed bracket 230 to then be fixed by a screw. Next, one end of the brake hose 100 is inserted into the fitting portion 211a of the first fitting member 210 to then be fixed by screws.

Subsequently, the locking piece 251b of the second fitting member 250 is inserted into the insertion hole 264b of the moving bracket 260 and is fixed by screws. Then, the opposite end of the brake hose 100 is inserted into the fitting portion 251a of the second fitting member 250 and is then fixed by screws.

Next, the gripping part 243 of the robot unit 240 is moved and inserted into the rear surface of the moving bracket 260 to firmly grip the same, and then the robot unit 240 is operated. At this time, the robot unit 240 is driven to conform to a predetermined layout range of the brake hose 100 so as to perform the layout test of the brake hose 100 while moving the brake hose 100 up, down, left, and right.

Meanwhile, the scanning part 300 is provided to obtain layout data by scanning the layout of the brake hose 100 during the layout test of the brake hose 100. The scanning part 300 may include a photographing unit 310 for scanning the layout of the brake hose through a 3D stereoscopic scan and moving means 320 for moving the photographing unit 310 up, down, back, forth, left, and right.

The moving means 320 may include a first moving unit 321 for moving the photographing unit up and down, a second moving unit 322 for moving the photographing unit back and forth, and a third moving unit 323 for moving the photographing unit left and right.

As shown in FIGs. 1 and 9, the controller 400 compares the layout data of the brake hose 100 obtained from the scanning part 300 with surrounding part data to determine whether or not interference occurs, and corrects the data on the interfering part to then provide the same to the 3D printer. The controller 400 may include a storage unit 410, an input unit 420, and a display unit 430.

The storage unit 410 may store layout scan data information on the brake hose and data information on surrounding parts, and the input unit 420 may input the layout scan data information and the surrounding part data information, which are stored in the storage unit 410, and may correct the layout scan data information. The display unit 430 may display the layout scan data information and the surrounding part data information, which are input from the input unit, on a screen.

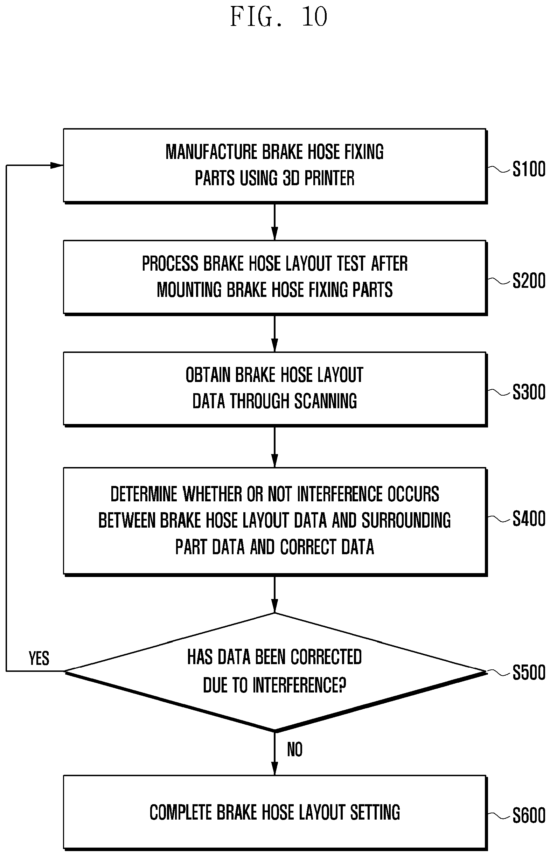

A brake hose layout setting method according to an embodiment of the disclosure will now be described with reference to FIG. 10.

As shown in FIG. 10, the brake hose layout setting method according to an embodiment of the disclosure may include: manufacturing fixing parts of the brake hose 100 by using a 3D printer (S100); mounting the fixing parts of the brake hose 100, which have been manufactured using the 3D printer, and then testing the layout of the brake hose 100 (S200); scanning the layout of the brake hose 100 to thus obtain layout data (S300); comparing the layout data of the brake hose with surrounding part data to determine interference therebetween and obtaining correction data on the interfering parts (S400); and if there is an interfering part, providing correcting data to the 3D printer, thereby remanufacturing the fixing parts of the brake hose 100 (S500).

The method may further include, if there is no interfering part, completing the layout setting of the brake hose 100 (S600).

More specifically, first, the first and second fitting members 210 and 250, the fixed bracket 230, and the moving bracket 260, which are fixing parts of the brake hose, are manufactured using the 3D printer. At this time, a predetermined angle formed by the fastening surfaces 212 and 252 of the first and second fitting members 210 and 250 and the locking surfaces 234 and 264 of the fixed bracket 230 and the moving bracket 260 may be reflected in order to prevent the occurrence of an initial twist of the brake hose when the layout is implemented.

Next, the fixing parts are mounted on the brake hose 100, and the layout test of the brake hose 100 is performed by the testing part 200. At this time, predetermined layout data of the brake hose 100 is provided to the robot unit 240 so that the robot unit 240 can move the brake hose 100 up, down, left, and right.

Then, the scanning part 300 is operated to scan the movement state of the brake hose 100 to thus obtain layout data information on the brake hose 100.

At this time, the storage unit 410 of the controller 400 receives the obtained layout data of the brake hose 100 from the scanning part 300 and stores the same along with data on surrounding parts.

Then, the layout scan data and surrounding part data stored in the storage unit 410 may be input through the input unit 420 to then be displayed on the screen of the display unit 430.

At this time, the layout data of the brake hose 100 is compared with the surrounding part data, which are displayed on the screen of the display unit 430, to determine whether or not the interference occurs, and a correction operation to avoid the interference is performed with respect to the interfering configurations through the input unit 420.

When the correction operation is completed, the corrected data is supplied to the 3D printer so that the fixing parts of the brake hose 100 may be remanufactured. In this case, if interference of the brake hose 100 occurs, the brake hose may also be remanufactured.

The remanufactured fixing parts of the brake hose 100 are mounted on the brake hose 100, and the layout test of the brake hose 100 is performed again.

The layout of the brake hose 100 may be accurately set by repeating the above-mentioned processes.

As described above, since the layout setting system of the brake hose, which is different from the prior art, is used in order to set the layout of the brake hose 100, it is possible to predict the interference characteristics between the brake hose and the surrounding parts, thereby designing the brake hose satisfying user's requirements.

In addition, since the fitting members into which both ends of the brake hose are inserted have the same structure, the fitting members can be used in common without distinguishing the same, which facilitates fastening. Further, since the moving bracket can be selected in consideration of the operating range of the robot unit and easiness for photographing of the scanning part, it is possible to easily process the test.

Therefore, the brake hose layout system according to various embodiments of the disclosure sets and implements, as a design value, a fixing angle between the fitting members and the fixing parts for fixing the same, thereby preventing the twist of the brake hose in the initial stage of the layout test. Furthermore, since the fitting members into which both ends of the brake hose are inserted have the same structure in the brake hose layout system according to various embodiments of the disclosure, the fitting members can be used in common without distinguishing the same, which facilitates fastening. In addition, since the moving bracket can be selected in consideration of the operating range of the robot unit and easiness for photographing of the scanning part, it is possible to easily process the test.

## Claims

1. A layout setting system for a brake hose (100), comprising:
a testing part (200) provided to test the layout of the brake hose (100) while brake hose fixing parts, which are manufactured using a 3D printer, are mounted;
a scanning part (300) provided to scan the layout of the brake hose (100) and to obtain layout data during the layout test of the brake hose (100); and
a controller (400) for comparing the layout data of the brake hose (100) obtained from the scanning part (300) with surrounding part data to determine whether or not interference occurs between the brake hose (100) and surrounding parts and for correcting data on interfering parts to then provide the same to the 3D printer,
wherein the testing part (200) comprises
the brake hose fixing parts;
first and second fitting members (210, 250) coupled to both ends of the brake hose (100), respectively, wherein the first and second fitting members (210, 250) have the same structure,
wherein the testing part (200) further comprises:
a fixed bracket (230) for fixing the first fitting member (210);
a moving bracket (260) for fixing the second fitting member (250);
a jig (220) provided to support one end of the brake hose (100); and
a robot unit (240) for moving the brake hose (100) up, down, left, and right while supporting the opposite end of the brake hose (100),
wherein the first and second fitting members (210, 250) comprise:
a fitting portion (211a, 251a) coupled to the brake hose (100);
a locking piece (211b, 251b) formed to protrude from the top of the fitting portion (211a, 251a) and to be engaged with the upper surfaces of the fixed bracket (230) and the moving bracket (260), respectively; and
a connecting portion (211, 251) for connecting the fitting portion (211a, 251a) with the locking piece (211b, 251b), and
wherein the connecting portion (211, 251) includes fastening surfaces (212, 252) formed in parallel with each other by cutting both sides thereof and has a diameter greater than those of the fitting portion (211a, 251a) and the locking piece (211b, 251b),
wherein the fastening surface (212) of the connecting portion (211) of the first fitting member (210) has a predetermined angle (θ) with the fastening surface (252) of the connecting portion (251) of the second fitting member (250) without being parallel with each other,
wherein the predetermined angle formed by the respective fastening surfaces (212) and (252) is capable of preventing the occurrence of an initial twist of the brake hose (100) when implementing the layout,
wherein the fixed bracket (230) is fixed to the jig (220), and
wherein the moving bracket (260) is provided to fix the second fitting member (250) to a gripping part (243) of the robot unit (240).

2. The system of claim 1, wherein the fixed bracket (230) comprises:
a fixing portion (231) for fixing the first fitting member (210) to the jig (220);
a bent portion (232) formed to be bent from the lower end of the fixing portion (231); and
a protruding portion (233) protruding from the bent portion (232) and having an insertion hole (233a) for receiving a locking piece (211b, 251b) of the first fitting member (210) to be fixed thereto.

3. The system of claim 1, wherein the moving bracket (260) comprises an insertion hole (264b) formed on the front surface thereof so as to receive the second fitting member (250) therein and a screw fastening hole (264a) formed on the side surface so as to screw the gripping part (243) of the robot unit (240) inserted through the rear surface thereof, and
wherein the second fitting member (250) is inserted horizontally into the insertion hole (264b) of the moving bracket (260) and is then coupled thereto.

4. The system of claim 1, wherein the moving bracket (260) comprises an insertion hole (264b) formed on the lower surface thereof so as to receive the second fitting member (250) therein and a screw fastening hole (264a) formed on the side surface so as to screw the gripping part (243) of the robot unit (240) inserted through the rear surface thereof, and
wherein the second fitting member (250) is inserted vertically into the insertion hole (264b) of the moving bracket (260) and is then coupled thereto.

5. The system of any one of claims 2 to 4, wherein the fastening surface of the fitting member (210, 250) inserted into the insertion hole (233a, 264b) is screwed by a screw, and
wherein the moving bracket (260) is selected in consideration of an operating range of the robot unit (240) and easiness for photographing of the scanning part (300).

6. A layout setting method for a brake hose (100), wherein the method uses the layout setting system of claim 1, the method comprising:
manufacturing fixing parts of the brake hose (100) using a 3D printer;
mounting the fixing parts of the brake hose (100) manufactured using the 3D printer and testing the layout of the brake hose (100);
scanning the layout of the brake hose (100) to obtain layout data;
comparing the layout data of the brake hose (100) with surrounding part data to determine whether or not interference occurs between the brake hose (100) and surrounding parts and obtaining correction data on interfering parts; and
if there is an interfering part, providing the correction data to the 3D printer, thereby remanufacturing the fixing parts of the brake hose (100),
wherein the fixing parts comprises first and second fitting members (210, 250), a fixed bracket (230), and a moving bracket (260), and
wherein respective fastening surfaces (212, 252) of the first and second fitting members (210, 250) are formed at an angle based on angle data capable of preventing the occurrence of an initial twist of the brake hose (100) when the layout is implemented.

## Patentansprüche

1. System zur Einstellung des Layouts eines Bremsschlauchs (100), umfassend:
ein Prüfteil (200), das bereitgestellt wird, um das Layout des Bremsschlauchs (100) zu prüfen, während Bremsschlauchbefestigungsteile, die unter Verwendung eines 3D-Druckers hergestellt werden, montiert werden;
ein Abtastteil (300), das vorgesehen ist, um das Layout des Bremsschlauchs (100) abzutasten und Layoutdaten während des Layouttests des Bremsschlauchs (100) zu erhalten; und
einen Controller (400) zum Vergleichen der Layoutdaten des Bremsschlauchs (100), die von dem Abtastteil (300) erhalten wurden, mit den Daten von umgebenden Teilen, um zu bestimmen, ob eine Interferenz zwischen dem Bremsschlauch (100) und den umgebenden Teilen auftritt oder nicht, und zum Korrigieren von Daten bezüglich interferierender Teile, um diese dann dem 3D-Drucker bereitzustellen,
wobei der Prüfteil (200) Folgendes umfasst
die Bremsschlauchbefestigungsteile;
ein erstes und ein zweites Anschlusselement (210, 250), die jeweils mit einem der beiden Enden des Bremsschlauchs (100) verbunden sind, wobei das erste und das zweite Anschlusselement (210, 250) die gleichen Struktur haben,
wobei der Prüfteil (200) weiterhin umfasst:
eine feste Halterung (230) zur Befestigung des ersten Anschlusselements (210);
eine bewegliche Halterung (260) zur Befestigung des zweiten Anschlusselements (250);
eine Vorrichtung (220), die zum Halten eines Endes des Bremsschlauchs (100) vorgesehen ist; und
eine Robotereinheit (240) zum Bewegen des Bremsschlauchs (100) nach oben, unten, links und rechts, während sie das gegenüberliegende Ende des Bremsschlauchs (100) hält,
wobei das erste und das zweite Anschlusselement (210, 250) Folgendes umfassen:
einen Anschlussabschnitt (211a, 251a), der mit dem Bremsschlauch (100) verbunden ist;
ein Verriegelungsteil (211b, 251b), das so geformt ist, dass es von dem oberen Abschnitt des Anschlussabschnitt (211a, 251a) vorsteht und mit den oberen Flächen der festen Halterung (230) bzw. der beweglichen Halterung (260) in Eingriff gebracht werden kann; und
einen Verbindungsabschnitt (211, 251) zum Verbinden des Anschlussabschnitts (211a, 251a) mit dem Verriegelungsteil (211b, 251b), und
wobei der Verbindungsabschnitt (211, 251) Befestigungsflächen (212, 252) aufweist, die durch Schneiden beider Seiten parallel zueinander ausgebildet sind, und einen Durchmesser hat, der größer ist als der des Anschlussabschnitts (211a, 251a) und des Verriegelungsteils (211b, 251b),
wobei die Befestigungsfläche (212) des Verbindungsabschnitts (211) des ersten Anschlusselements (210) einen vorbestimmten Winkel (θ) mit der Befestigungsfläche (252) des Verbindungsabschnitts (251) des zweiten Anschlusselements (250) hat, ohne parallel zueinander zu sein,
wobei der vorbestimmte Winkel, der durch die jeweiligen Befestigungsflächen (212) und (252) gebildet wird, in der Lage ist, das Auftreten einer anfänglichen Verdrehung des Bremsschlauchs (100) zu verhindern, wenn die Anordnung implementiert wird,
wobei die feste Halterung (230) an der Vorrichtung (220) befestigt ist, und
wobei die bewegliche Halterung (260) vorgesehen ist, um das zweite Anschlusselement (250) an einem Greifteil (243) der Robotereinheit (240) zu befestigen.

2. System nach Anspruch 1, wobei die feste Halterung (230) umfasst:
einen Befestigungsabschnitt (231) zum Befestigen des ersten Anschlusselements (210) an der Vorrichtung (220);
einen gebogenen Abschnitt (232), der so ausgebildet ist, dass er vom unteren Ende des Befestigungsabschnitts (231) aus gebogen werden kann; und
einen vorstehenden Abschnitt (233), der von dem gebogenen Abschnitt (232) vorsteht und ein Einführungsloch (233a) zur Aufnahme eines daran zu befestigenden Verriegelungsteils (211b, 251b) des ersten Anschlusselements (210) aufweist.

3. System nach Anspruch 1, wobei die bewegliche Halterung (260) ein Einführungsloch (264b), das an ihrer Vorderfläche ausgebildet ist, um das zweite Anschlusselement (250) darin aufzunehmen, und ein Schraubenbefestigungsloch (264a), das an der Seitenfläche ausgebildet ist, um das durch ihre Rückfläche eingeführte Greifteil (243) der Robotereinheit (240) zu verschrauben, aufweist, und
wobei das zweite Anschlusselement (250) horizontal in das Einführungsloch (264b) der beweglichen Halterung (260) eingeführt und dann damit verbunden wird.

4. System nach Anspruch 1, wobei die bewegliche Halterung (260) ein Einführungsloch (264b), das an ihrer unteren Fläche ausgebildet ist, um das zweite Anschlusselement (250) darin aufzunehmen, und ein Schraubenbefestigungsloch (264a), das an der Seitenfläche ausgebildet ist, um das Greifteil (243) der Robotereinheit (240), das durch ihre hintere Fläche eingeführt wird, zu verschrauben, umfasst, und
wobei das zweite Anschlusselement (250) vertikal in das Einführungsloch (264b) der beweglichen Halterung (260) eingeführt und dann damit verbunden wird.

5. System nach einem der Ansprüche 2 bis 4, wobei die Befestigungsfläche des in das Einführungsloch (233a, 264b) eingeführten Anschlusselements (210, 250) durch eine Schraube verschraubt ist und
wobei die bewegliche Halterung (260) unter Berücksichtigung eines Betriebsbereichs der Robotereinheit (240) und der Leichtigkeit des Fotografierens des Abtastteils (300) ausgewählt wird.

6. Verfahren zur Einstellung des Layouts für einen Bremsschlauch (100), wobei das Verfahren das System zur Einstellung des Layouts nach Anspruch 1 verwendet, wobei das Verfahren umfasst:
Herstellung von Befestigungsteilen des Bremsschlauchs (100) mit einem 3D-Drucker;
Montage der mit dem 3D-Drucker hergestellten Befestigungsteile des Bremsschlauchs (100) und Prüfung des Layouts des Bremsschlauchs (100);
Abtasten des Layouts der Bremsschlauch (100), um Layoutdaten zu erhalten;
Vergleichen der Layoutdaten des Bremsschlauchs (100) mit den Daten von umgebenden Teile, um zu bestimmen, ob eine Interferenz zwischen dem Bremsschlauch (100) und den umgebenden Teilen auftritt oder nicht, und Erhalten von Korrekturdaten bezüglich interferierende Teile; und
wenn ein interferierende Teil vorhanden ist, Bereitstellen der Korrekturdaten an den 3D-Drucker, wodurch die Befestigungsteile des Bremsschlauchs (100) erneut hergestellt werden,
wobei die Befestigungsteile ein erstes und ein zweites Anschlusselement (210, 250), eine feste Halterung (230) und eine bewegliche Halterung (260) umfassen, und
wobei die jeweiligen Befestigungsflächen (212, 252) der ersten und zweiten Anschlusselemente (210, 250) in einem Winkel ausgebildet sind, der auf Winkeldaten basiert, die in der Lage sind, das Auftreten einer anfänglichen Verdrehung des Bremsschlauchs (100) zu verhindern, wenn die Anordnung implementiert wird.

## Revendications

1. Système de configuration d'agencement pour un flexible de frein (100), comprenant :
une partie de test (200) fournie pour tester l'agencement du flexible de frein (100) tandis que des parties de fixation de flexible de frein, qui sont fabriquées à l'aide d'une imprimante 3D, sont montées ;
une partie de balayage (300) fournie pour balayer l'agencement du flexible de frein (100) et pour obtenir des données d'agencement durant le test d'agencement du flexible de frein (100) ; et
un dispositif de commande (400) pour comparer les données d'agencement du flexible de frein (100) obtenues à partir de la partie de balayage (300) avec des données de parties environnantes pour déterminer si oui ou non une interférence apparaît entre le flexible de frein (100) et des parties environnantes et pour corriger des données sur des parties qui interfèrent pour ensuite fournir celles-ci à l'imprimante 3D,
dans lequel la partie de test (200) comprend
les parties de fixation de flexible de frein ;
des premier et second éléments d'ajustement (210, 250) couplés aux deux extrémités du flexible de frein (100), respectivement, dans lequel les premier et second éléments d'ajustement (210, 250) ont la même structure,
dans lequel la partie de test (200) comprend en outre :
une attache fixe (230) pour fixer le premier élément d'ajustement (210) ;
une attache mobile (260) pour fixer le second élément d'ajustement (250) ;
un dispositif de serrage (220) fourni pour supporter une extrémité du flexible de frein (100) ; et
une unité robotisée (240) pour bouger le flexible de frein (100) vers le haut, vers le bas, vers la gauche, et vers la droite tout en supportant l'extrémité opposée du flexible de frein (100),
dans lequel les premier et second éléments d'ajustement (210, 250) comprennent :
une portion d'ajustement (211a, 251a) couplée au flexible de frein (100) ;
une pièce de verrouillage (211b, 251b) formée pour faire saillie à partir du dessus de la portion d'ajustement (211a, 251a) et pour être mise en prise avec les surfaces supérieures de l'attache fixe (230) et de l'attache mobile (260), respectivement ; et
une portion de liaison (211, 251) pour relier la portion d'ajustement (211a, 251a) à la pièce de verrouillage (211b, 251b), et
dans lequel la portion de liaison (211, 251) comprend des surfaces d'assujettissement (212, 252) formées parallèlement l'une à l'autre en découpant les deux côtés de celle-ci et a un diamètre supérieur à ceux de la portion d'ajustement (211a, 251a) et de la pièce de verrouillage (211b, 251b),
dans lequel la surface d'assujettissement (212) de la portion de liaison (211) du premier élément d'ajustement (210) a un angle (θ) prédéterminé avec la surface d'assujettissement (252) de la portion de liaison (251) du second élément d'ajustement (250) sans être parallèles l'une à l'autre,
dans lequel l'angle prédéterminé formé par les surfaces d'assujettissement (212) et (252) respectives est capable d'empêcher l'apparition d'une torsion initiale du flexible de frein (100) lors de la réalisation de l'agencement,
dans lequel l'attache fixe (230) est fixée au dispositif de serrage (220), et
dans lequel l'attache mobile (260) est fournie pour fixer le second élément d'ajustement (250) à une partie de préhension (243) de l'unité robotisée (240).

2. Système selon la revendication 1, dans lequel l'attache fixe (230) comprend :
une portion de fixation (231) pour fixer le premier élément d'ajustement (210) au dispositif de serrage (220) ;
une portion courbée (232) formée pour être courbée à partir de l'extrémité inférieure de la portion de fixation (231) ; et
une portion saillante (233) faisant saillie à partir de la portion courbée (232) et ayant un trou d'insertion (233a) pour recevoir une pièce de verrouillage (211b, 251b) du premier élément d'ajustement (210) devant être fixé à celle-ci.

3. Système selon la revendication 1, dans lequel l'attache mobile (260) comprend un trou d'insertion (264b) formé sur la surface avant de celle-ci de façon à recevoir le second élément d'ajustement (250) dans celuici et un trou d'assujettissement de vis (264a) formé sur la surface latérale de façon à visser la partie de préhension (243) de l'unité robotisée (240) insérée à travers la surface arrière de celle-ci, et
dans lequel le second élément d'ajustement (250) est inséré horizontalement dans le trou d'insertion (264b) de l'attache mobile (260) et est ensuite couplé à celle-ci.

4. Système selon la revendication 1, dans lequel l'attache mobile (260) comprend un trou d'insertion (264b) formé sur la surface inférieure de celle-ci de façon à recevoir le second élément d'ajustement (250) dans celuici et un trou d'assujettissement de vis (264a) formé sur la surface latérale de façon à visser la partie de préhension (243) de l'unité robotisée (240) insérée à travers la surface arrière de celle-ci, et
dans lequel le second élément d'ajustement (250) est inséré verticalement dans le trou d'insertion (264b) de l'attache mobile (260) et est ensuite couplé à celle-ci.

5. Système selon l'une quelconque des revendications 2 à 4, dans lequel la surface d'assujettissement de l'élément d'ajustement (210, 250) inséré dans le trou d'insertion (233a, 264b) est vissée par une vis, et
dans lequel l'attache mobile (260) est sélectionnée compte tenu d'une plage de fonctionnement de l'unité robotisée (240) et de la facilité à photographier de la partie de balayage (300).

6. Procédé de configuration d'agencement pour un flexible de frein (100), dans lequel le procédé utilise le système de configuration d'agencement selon la revendication 1, le procédé comprenant :
la fabrication de parties de fixation du flexible de frein (100) à l'aide d'une imprimante 3D ;
le montage des parties de fixation du flexible de frein (100) fabriquées à l'aide de l'imprimante 3D et le test de l'agencement du flexible de frein (100) ;
le balayage de l'agencement du flexible de frein (100) pour obtenir des données d'agencement ;
la comparaison des données d'agencement du flexible de frein (100) avec des données de parties environnantes pour déterminer si oui ou non une interférence apparaît entre le flexible de frein (100) et des parties environnantes et l'obtention de données de correction sur des parties qui interfèrent ; et
s'il existe une partie qui interfère, la fourniture des données de correction à l'imprimante 3D, pour refabriquer ainsi les parties de fixation du flexible de frein (100),
dans lequel les parties de fixation comprennent des premier et second éléments d'ajustement (210, 250), une attache fixe (230), et une attache mobile (260), et
dans lequel des surfaces d'assujettissement (212, 252) respectives des premier et second éléments d'ajustement (210, 250) sont formées à un angle basé sur des données d'angle capable d'empêcher l'apparition d'une torsion initiale du flexible de frein (100) lorsque l'agencement est réalisé.
